(19)

Europäisches
Patentamt
European
Patent Office
Office européen
des brevets

(11) **EP 3 528 109 A1**

(12) **EUROPEAN PATENT APPLICATION**

(43) Date of publication:
**21.08.2019 Bulletin 2019/34**

(51) Int Cl.:
***G06F 8/38*** (2018.01)

(21) Application number: **18165353.6**

(22) Date of filing: **31.03.2018**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN**<br><br>(30) Priority: **16.02.2018 IN 201841005971**<br><br>(71) Applicant: **Wipro Limited**<br>**560 035 Karnataka (IN)** | (72) Inventors:<br>• **CHANDA, Debasish**<br>**700140 West Bengal (IN)**<br>• **MANDAL, Swarup**<br>**700075 Kolkata (IN)**<br>• **DUTTA, Souvik**<br>**700094 Kolkata (IN)**<br><br>(74) Representative: **Finnegan Europe LLP**<br>**1 London Bridge**<br>**London SE1 9BG (GB)** |

(54) **METHOD AND SYSTEM FOR INTEGRATING SCENE DATABASE WITH HMI APPLICATION**

(57) The present disclosure discloses a method and system for integrating a dynamic scene Database (DB) with a Human Machine Interface (HMI) application. The method comprises receiving a scene specification. The scene specification comprises scene data and one or more parameters associated with the scene data. Further, a data pool and a design interface are generated based on the scene specification and a business logic associated with the scene data. Thereafter, a dynamic scene DB is developed based on the one or more parameters, the data pool and the design interface. Furthermore, the scene data in the dynamic scene DB is updated when the scene data in the scene specification is updated. Lastly, the dynamic scene DB is integrated with a HMI application for displaying a view. The HMI application retrieves the updated scene data from the dynamic scene DB for displaying an updated view.

100

```
┌──────────────┐     ┌──────────────┐     ┌──────────────┐
│    SCENE     │     │  SCENE DB    │     │   SCENE DB   │
│ SPECIFICATION│ ──▶ │ DEVELOPMENT  │ ──▶ │     103      │
│ INPUT SOURCE │     │  TOOL 102    │     │              │
│     101      │     │              │     │              │
└──────────────┘     └──────────────┘     └──────────────┘
                            │                     │
                            ▼                     │
                     ┌──────────────┐             │
                     │     HMI      │             │
                     │ APPLICATION  │ ◀───────────┘
                     │     104      │
                     └──────────────┘
```

**FIGURE 1**

EP 3 528 109 A1

**Description**

## TECHNICAL FIELD

The present disclosure relates to Human Machine Interface (HMI). More specifically, but not exclusively, the present disclosure relates to a method and a system for integrating a scene database with a HMI application.

## BACKGROUND

Many applications interact with humans with the help of Human Machine Interface (HMI). HMI development for an application is based on user interface required for the application and a business logic. The user interface is also referred as a scene. During the development cycle of the application, a view (for example graphics) of the scene and the business logic may be changed. Hence, the HMI should be changed according to changes in the view and the business logic.

In the existing HMI applications, when the business logic is updated, or a new view is suggested, the entire scene of the HMI application has to be changed. Thus, to achieve productivity, the business logic and the view have to be finalized before developing the HMI application. In few circumstances, the changes required in the view according to changes in the business logic is noticed only when the HMI is developed. Thus, a compromise has to be made to choose either to develop the view initially to avoid changing the HMI, or to change the HMI according to changes in the business logic. Further, the development of HMI incurs huge amount of resources. Also, plenty of risks are involved while finalizing the view before the HMI development. Thus, the existing systems do not provide proficient system.

The information disclosed in this background of the disclosure section is only for enhancement of understanding of the general background of the invention and should not be taken as an acknowledgement or any form of suggestion that this information forms the prior art already known to a person skilled in the art.

## SUMMARY

In an embodiment, the present disclosure discloses a method for integrating a dynamic scene Database (DB) with a Human Machine Interface (HMI) application. The method comprises receiving, by a Database (DB) development tool, a scene specification from one or more scene input sources. The scene specification comprises scene data and one or more parameters associated with the scene data. The scene data represents a view. Further, the method comprises associating the scene data with a business logic. Thereafter, the method comprises generating a data pool and a design interface based on the business logic. Thereafter, the method comprises developing a dynamic scene DB based on at least one of the data pool, the design interface and the one or more parameters. Thus, the dynamic scene DB comprises the scene data. Furthermore, the method comprises updating the scene data in the dynamic scene DB when at least one of the business logic and the scene data in the scene specification is updated. Lastly, the method comprises integrating the dynamic scene DB with a HMI application for displaying the view, where the HMI application retrieves the updated scene data from the dynamic scene DB for implementing at least one of the updated business logic and the updated scene data.

In an embodiment, the present disclosure discloses a dynamic scene Database (DB) development tool for integrating with a Human Machine Interface (HMI) application. The dynamic scene DB comprises a processor and a memory. The processor is configured to receive a scene specification from one or more scene input sources. The scene specification comprises scene data and one or more parameters associated with the scene data. The scene data represents a view. Further, the processor associates the scene data with a business logic. Thereafter, the processor generates a data pool and a design interface based on the business logic. Thereafter, the processor develops a dynamic scene DB based on at least one of the data pool, the design interface and the one or more parameters. Thus, the dynamic scene DB comprises the scene data. Furthermore, the processor updates the scene data in the dynamic scene DB when at least one of the business logic and the scene data in the scene specification is updated. Lastly, the processor integrates the dynamic scene DB with a HMI application for displaying the view, where the HMI application retrieves the updated scene data from the dynamic scene DB for implementing at least one of the updated business logic and the updated scene data.

In an embodiment, the present disclosure discloses a non-transitory computer readable medium including instruction stored thereon that when processed by at least one processor cause a dynamic scene development tool to perform operation comprising, receiving a scene specification from one or more input sources, where the scene specification comprises scene data and one or more parameters associated with the scene data, wherein the scene data represents a view; associating the scene data with a business logic, wherein associating comprises generating a data pool and design interface; developing a dynamic scene DB based on at least one of the data pool, the design interface and the one or more parameters, where the dynamic scene DB comprises the scene data of the scene specification; updating the scene data in the dynamic scene DB when at least one of the scene data in the scene specification and the business logic is updated; and integrating the dynamic scene DB with a HMI application for displaying the view, where the HMI application retrieves the updated scene data from the dynamic scene DB for implementing at least one of the updated business logic and the updated scene data.

The foregoing summary is illustrative only and is not intended to be in any way limiting. In addition to the illustrative aspects, embodiments, and features described above, further aspects, embodiments, and features will become apparent by reference to the drawings and the following detailed description.

## BRIEF DESCRIPTION OF THE ACCOMPANYING DRAWINGS

The novel features and characteristic of the disclosure are set forth in the appended claims. The disclosure itself, however, as well as a preferred mode of use, further objectives and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:

Figure 1 is illustrative of an environment for developing a scene database for integrating with a Human Machine Interface (HMI) application, in accordance with some embodiments of the present disclosure;

Figure 2 shows an exemplary block diagram of internal architecture of a scene database development tool, in accordance with some embodiments of the present disclosure;

Figure 3 shows an exemplary flow chart illustrating method steps for integrating a scene database with a Human Machine Interface (HMI) application, in accordance with some embodiments of the present disclosure;

Figure 4 shows an exemplary flow chart illustrating method steps for developing a scene database, in accordance with some embodiments of the present disclosure;

Figure 5a shows an exemplary scene development editor for developing a scene database, in accordance with some embodiments of the present disclosure;

Figure 5b shows an exemplary diagram illustrating data hierarchy levels in a scene database, in accordance with some embodiments of the present disclosure; and

Figure 6 shows a block diagram of a general-purpose computer system for integrating a business logic database with a Human Machine Interface (HMI), in accordance with some embodiments of the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

## DETAILED DESCRIPTION

In the present document, the word "exemplary" is used herein to mean "serving as an example, instance, or illustration."

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

Embodiments of the present disclosure relate to method and system for integrating a scene Database (DB) with a Human Machine Interface (HMI). The system receives a scene specification from a scene input source. The scene specification may comprise scene data and one or more parameters associated with the scene data. Then, the system may associate the scene data with a business logic. Further, the system may generate a data pool and a design interface based on the business logic. Further, the system may generate a scene DB based on the data pool, design interface and the one or more parameters. Thereafter, the system may integrate the scene DB with a Human Machine Interface (HMI). When one of the scene specification or the business logic is updated, the scene DB may be updated. Further, the system may integrate the updated scene DB with the HMI application. Thus, the HMI application may not be developed with the updated scene specification, when the scene data or the business logic is updated. Instead, the system may integrate only the updated scene with the HMI application when one of the scene specification or the business logic is updated.

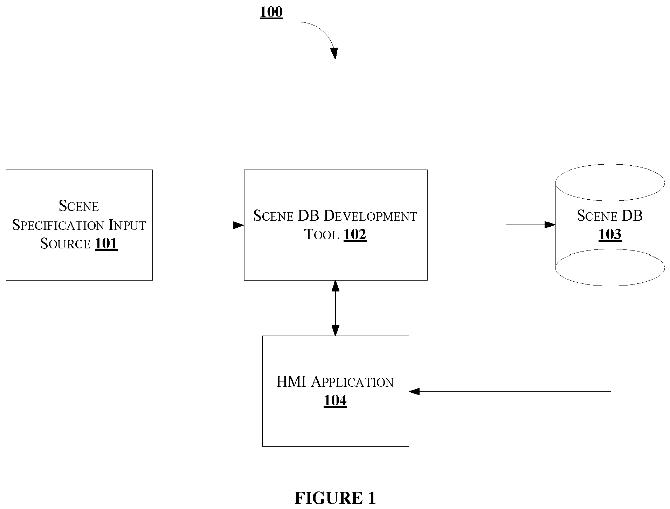

Figure 1 illustrates an environment 100 for developing a scene Database (DB) for integrating with a Human Machine Interface (HMI) application, in accordance with some embodiments of the present disclosure. The environment 100 may comprise a scene specification input source 101, a scene DB development tool 102, a scene DB 103 and a HMI application 104. The scene specification input source 101 may comprise the scene specification. The scene specification may comprise details regarding a view, a logic associated with the view, graphics, theme, color details, and the like required for developing the scene of the HMI application 104. The logic associated with the view may define start-up procedure of the HMI application 104, and progression and prioritization of the animations in the HMI application 104 (for example, an animation to show increase in volume). In an embodiment, the scene specification input source 101 may be any source capable of provisioning a scene specification in at least one of a text format, a Visio™ format, a graphical format and the like. In an embodiment, the scene specification source 101 may be an Original Equipment Manufacturer (OEM). In an embodiment, the scene specification input source 101 may be any computing device or a user. The scene specification may be provided to the scene DB development tool 102 in a scene specification format. Alternatively, the scene specification may be provided in a graphical format (drawings present in a paper). In such scenario, the graphical format may have to be converted to the scene specification format either manually or using a dedicated tool (not shown in figure). The scene specification may comprise scene data and one or more parameters associated with the scene data. The scene data may be data related to the logic of the view.

The scene DB development tool 102 may receive the scene specification from the scene specification input source 101. The scene DB development tool 102 may receive the scene specification from the scene specification input source 101 through one of a wired interface or a wireless interface. Further, the scene DB development tool 102 may develop the scene DB 103 based on the scene specification. When the scene data in the scene specification is updated, the scene DB development tool 102 may update the scene DB 103 with the updated scene data. The scene DB development tool 102 may use a query language to interact with the scene DB 103. The query language may comprise one or more queries. The one or more queries may indicate an action to be performed on the scene DB 103. The scene DB development tool 102 may be associated with the scene DB 103 through one of a wired interface or a wireless interface.

In an embodiment, the scene DB development tool 102 may integrate the scene DB 103 with the HMI application 104. The HMI application 104 may use the scene data in the scene DB 103 for displaying the view. The HMI application 104 may be a user interface that is used by a user. The view may facilitate the HMI application 104 to provide various services to the user. For example, in an infotainment system, when the user chooses a radio option, the HMI application 104 present in the infotainment system may provide the user with options to choose a frequency from a range of frequencies. Each service may be triggered by the user or by the HMI application 104 itself. In the example described, the user triggers a radio service. The HMI application 104 may trigger the service of displaying available radio frequencies to the user. Thus, displaying available radio frequencies in a particular format when the user requests the radio service may be defined in the scene data. Likewise, various use cases may be defined in the scene data. Hence, the scene data may be dependent on a current view of the HMI application 104. The scene DB development tool 102 may configure the scene DB 103 to provide the HMI application 104 with the updated scene data when the scene specification is updated. In an embodiment, the scene data may be updated when a business logic associated with the scene data is updated. Thus, the HMI application 104 having a predefined view may be integrated with the scene data, even when the business logic is updated. Thus, the scene DB development tool 102 may provision a scene that can be retrieved from the scene DB 103 when required, thereby creating a robust and independent environment 100.

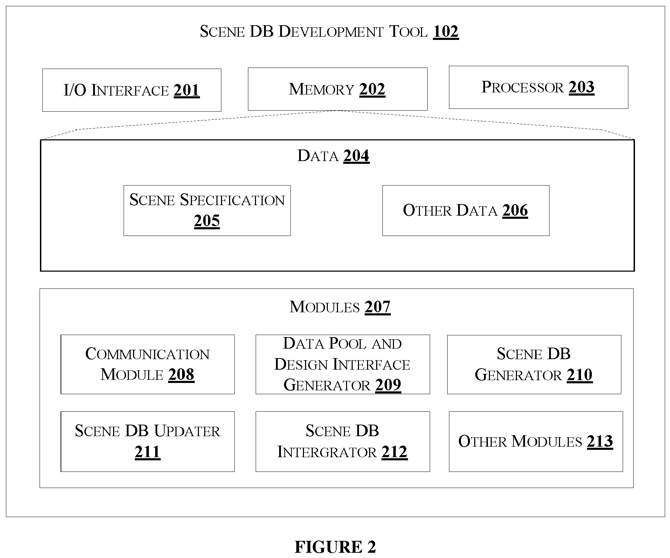

**Figure 2** illustrates internal architecture of the scene DB development tool 102 in accordance with some embodiments of the present disclosure. The scene DB development tool 102 may include at least one Central Processing Unit ("CPU" or "processor") 203 and a memory 202 storing instructions executable by the at least one processor 203. The processor 203 may comprise at least one data processor for executing program components for executing user or system-generated requests. The memory 202 is communicatively coupled to the processor 203. The scene DB development tool 102 further comprises an Input/Output (I/O) interface 201. The I/O interface 201 is coupled with the processor 203 through which an input signal or/and an output signal is communicated.

In an embodiment, data 204 may be stored within the memory 202. The data 204 may include, for example, scene specification 205 and other data 206.

The scene specification 205 may include the scene data and the one or more parameters associated with the scene data. The scene data may include, but is not limited to, the logic of the view HMI application 104, graphics of the view, resolution details, widget details, theme details, color details, and the like. The one or more parameters may include, but is not limited to, resolution of a device hosting the HMI application 104, cost associated in implementing the view, and complexity in implementing the view.

In an embodiment, the other data 206 may include, but is not limited to, information about HMI application 104 supporting the scene specification 205, database requirements for implementing the scene DB 103 and the like.

In an embodiment, the data 204 in the memory 202 may be processed by modules 207 of the scene DB development tool 102. As used herein, the term module refers to an Application Specific Integrated Circuit (ASIC), an electronic circuit, a Field-Programmable Gate Arrays (FPGA), Programmable System-on-Chip (PSoC), a combinational logic circuit, and/or other suitable components that provide the described functionality. The modules 207 when configured with the functionality defined in the present disclosure will result in a novel hardware.

In one implementation, the modules 207 may include, for example, a communication module 208, a data pool and design interface generator 209, a scene DB generator 210, a scene DB updater 211, a scene DB integrator 212 and other modules 213. It will be appreciated that such aforementioned modules 207 may be represented as a single module or a combination of different modules.

In an embodiment, the communication module 208 may receive the scene specification 205 from the scene specification input source 101. The communication module 208 may interact with the HMI application 104. When the scene DB 103 is updated, the HMI application 104 may retrieve only the updated scene data from the scene DB 103. When the scene DB 103 is updated, the communication module 208 may indicate the HMI application 104 of such updates. In an embodiment, the communication module 208 may indicate the HMI application 104 regarding the updates of the scene DB 103 at predefined time intervals.

In an embodiment, the data pool and design interface generator 209 may generate a data pool and a design interface based on the business logic. In an embodiment, the scene data may be associated with the business logic. The business logic may define the logic behind the view, i.e., when a user performs an action on a widget, a functionality associated with the widget is defined by the business logic. Thus, the data pool and design interface generator 209 may generate a design interface based on the business logic. In an embodiment, the view may be the visible interface to the user. When the user performs an action using the view, the design interface may link the view to the business logic, and an appropriate response may be provided to the user. For example, the view may comprise options such as a draw new screen and an update component of the screen. The design interface may link the options provided in the view with the business logic. Further, the data pool and design interface generator 209 may generate a data pool based on the scene data and the business logic. The data pool may be used by the view to provide additional information to the user. The data pool may comprise details regarding triggers initiated by the user Furthermore, the data pool may be used for updating dynamic content in the view.

In an embodiment, the scene DB generator 210 may generate the scene DB 103 using the data pool, the design interface and the one or more parameters. The scene DB 103 may comprise the scene data. The scene DB 103 may be dynamic, i.e., the scene DB 103 may be updated at predefined intervals of time or when the scene data is updated.

In an embodiment, the scene DB updater 211 may update the scene DB 103 using the one or more queries. The one or more queries may indicate an action performed on the scene DB 103. Each action is used to keep the scene DB 103 updated. The scene DB 103 may be updated when the scene data in the scene specification 205 is updated or the business logic is updated.

In an embodiment, scene DB integrator 212 may integrate the scene DB 103 with the HMI application 104. The scene DB 103 may be integrated with the HMI application 104 so that the HMI application 104 may present the view to the user. When the user performs an action using the HMI application 104, the underlying business logic may be initiated to respond to the user. A new view may be presented to the user in response to the user input. Thus, the HMI application 104 may be integrated with the dynamic scene DB 103. Further, when the business logic or the scene data in the scene specification 205 is updated, a corresponding update may be reflected in the scene DB 103. The updated scene data may be retrieved by the HMI application 104 as and when required. Thus, the view of the HMI application 104 may not be changed every time the scene data or the business logic is updated. The integration of the scene DB 103 with the HMI application 104 may enable easy development of the view for the HMI application 104.

In an embodiment, the other modules 213 may include, but are not limited to, a notification module, scene specification format generator, a query generator, and the like. The notification module may provide a notification to the HMI application 104 whenever the scene DB 103 is updated. Thus, scene specification format generator may convert the scene specification 205 to the specified format. The query generator may generate a set of queries based on the user input in the HMI application 104. For example, in an infotainment system, when the user requests for radio service, the query generator may generate a query to retrieve view to display all the radio frequencies available to the user.

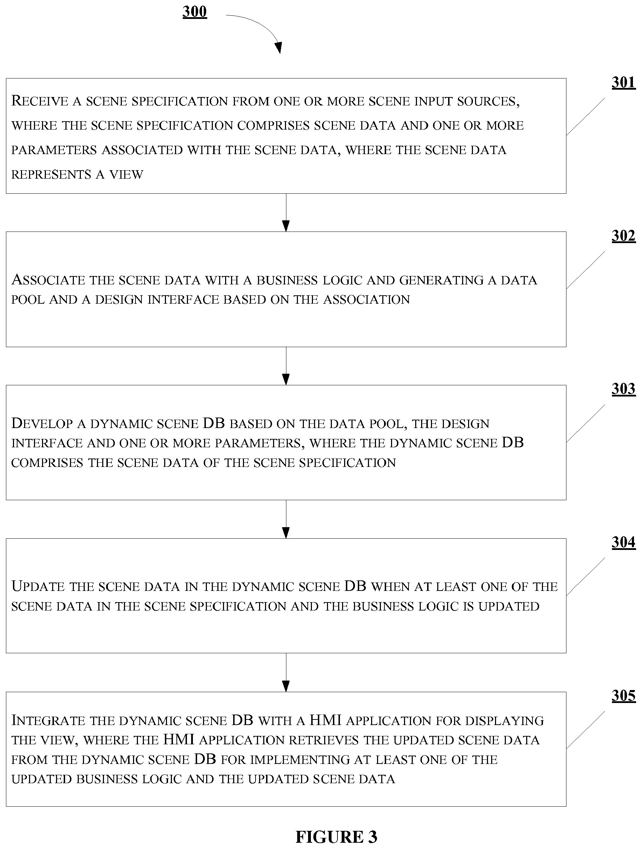

**Figure 3** shows a flow chart illustrating a method for integrating the scene DB 103 with the HMI application 104, in accordance with some embodiments of the present disclosure.

As illustrated in **Figure 3,** the method 300 may comprise one or more steps for integrating the scene DB 103 with the HMI application 104, in accordance with some embodiments of the present disclosure. The method 300 may be described in the general context of computer executable instructions. Generally, computer executable instructions can include routines, programs, objects, components, data structures, procedures, modules, and functions, which perform particular functions or implement particular abstract data types.

The order in which the method 300 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At step 301, the communication module 208 may receive the scene specification 205 from the scene specification input source 101. The scene specification 205 may comprise the scene data and the one or more parameters associated with the scene data. In an embodiment, the communication module 208 may receive the scene specification 205 in the scene specification format. In an embodiment, the scene specification format generator may convert the scene specification 205 to the scene specification format when the scene specification 205 is not received in the scene specification format. The scene specification 205 may be provided by the OEM. The OEM may provide the scene specification 205 in a sketch format. The scene specification format generator may convert the scene specification 205 to the scene specification format (for example to a graphic format). One example of the scene specification format is a Photoshop (PSD) format. Another example of the scene specification format may be a Visio™ format. In an embodiment, any other scene specification format may be used.

In an embodiment, the scene specification 205 may be generated in a hierarchical format. The view may comprise one or more panels. Each panel may comprise one or more widgets. A graphic tool generator (not shown in figure) may be used to generate the one or more widgets. In an embodiment, a unique Object Identity (OID) may be assigned to the one or more panels and the one or more widgets. The format of the OID may be:

$$OID = <ID\_Prefix> <ID>$$

In the above OID format, the ID_Prefix may be unique based on type of the one or more widgets. A utility script may be generated to verify uniqueness of the OID.

At step 302, the data pool and design interface generator 209 may generate the data pool and the design interface based on the business logic associated with the scene data. The design interface may link the view with the business logic. The data pool may be used by the view to provide additional information to the user. Furthermore, the data pool may be used for updating dynamic content in the view.

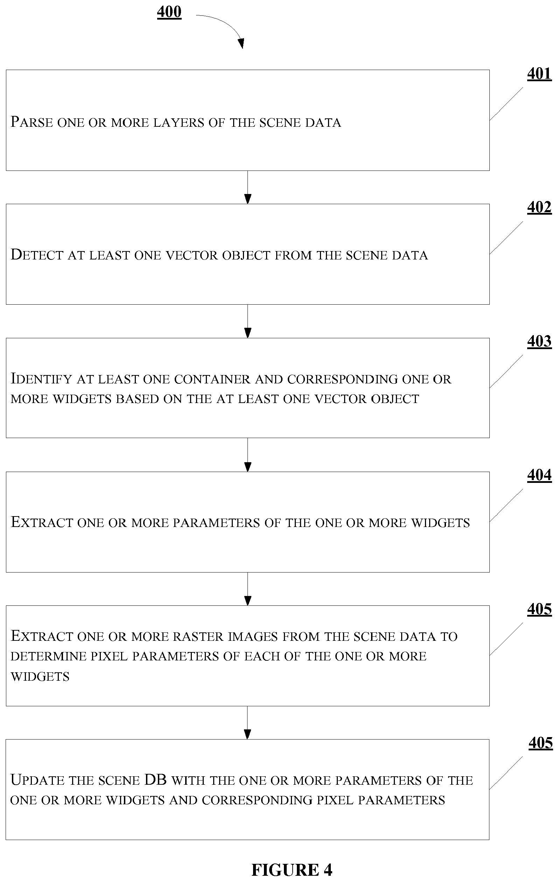

At step 303, the scene DB generator 210 may generate the scene DB 103 based on data pool, the design interface and the one or more parameters of the scene data. The one or more layers in the scene specification 205 may be used in generating the scene DB 103. In a first layer of the one or more layers, a screen may be divided into one or more containers. Each of the one or more containers may comprise nested containers. A second layer of the one or more layers may comprise the one or more widgets. The OID may be assigned to the one or more containers and the one or more widgets. **Figure 4** shows a flow chart illustrating detailed method steps for generating the scene DB 103.

At step 401, the scene DB generator 210 may parse the one or more layers and create a document tree structure. Parsing the one or more layers may comprise extracting objects in the screen and labelling the objects based on a state. For example, a top-down template matching technique or sequential bottom-up perceptual grouping techniques may be used for parsing the one or more layers. For example, a screen may comprise a text in a box, the box within a theme and the theme surrounded by a border. The text may be considered as a first layer, the box may be considered a second layer, the theme may be considered as a third layer, and the border may be considered as a fourth layer.

At step 402, the scene DB generator 210 may detect at least one vector object from the scene data.

At step 403, the scene DB generator 210 may identify the one or more containers and corresponding one or more widgets based on the at least one vector object.

At step 404, the scene DB generator 210 may extract one or more parameters of the one or more widgets. The one or more parameters of the one or more widgets may include, but are not limited to, widget type, style attributes, data pool ID, etc. In an embodiment, the one or more parameters of the one or more widgets may be extracted using the ID_Prefix.

At step 405, the scene DB generator 210 may extract one or more raster images from the scene data to determine pixel parameters of each of the one or more widgets. In an embodiment, the raster image may be composed of individual pixels of various colors. The one or more raster images may be used for indicating color composition of each pixel in the screen.

At step 406, the scene DB generator 210 may update the scene DB 103 with the one or more parameters of the one or more widgets and the corresponding one or more parameters.

For example, in the first layer, the screen may be divided into one or more containers. Each of the one or more containers, there may be nested containers. Likewise, the second layer may be divided into the one or more containers. In the second layer, each of the one or more containers may contain one or more widgets. A unique OID may be assigned to each of the one or more containers and the one or more widgets. The unique OID may have a prefix based on the one or more containers or a widget type.

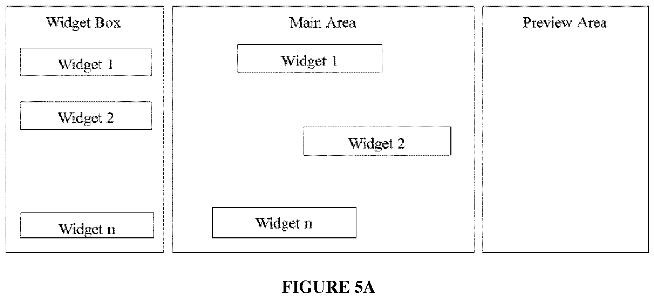

In an embodiment, the scene DB generator 210 may be alternatively used as scene editor in the present disclosure. As shown in the **Figure5A,** the scene editor 210 may comprise a tool box indicating the one or more widgets. The scene editor 210 may also comprise a main area where the one or more widgets may be placed from a widget box. The one or more widgets are used in the main area according to the scene data specified in the scene specification 205.

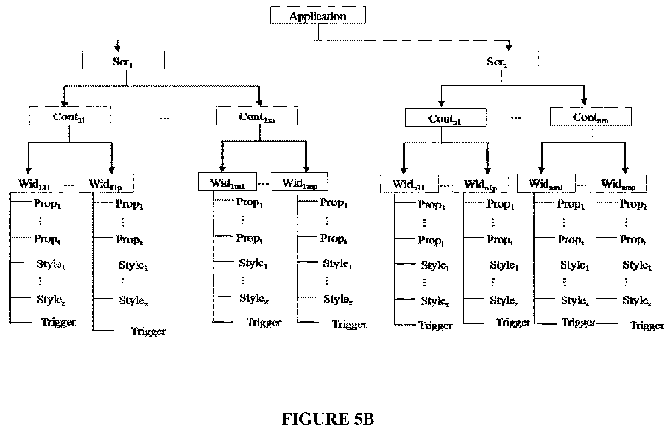

In an embodiment, the hierarchal structure of the scene DB 103 comprising the one or more layers is represented in **Figure 5B.**

Referring back to **Figure 3,** at step 304, the scene DB updater 211 may update the scene DB 103 when the scene data in the scene specification 205 is updated or the business logic is updated. In an embodiment, the scene DB updater 211 may use the scene editor 210 to update the scene DB 103. The scene DB updater 211 may use the query language to communicate with the scene DB 103.

At step 305, the scene DB integrator 212 may integrate the scene DB 103 with the HMI application 104. In an embodiment, the integration of the scene DB 103 with the HMI application 104 may comprise implementing a View to Business Logic Interface (VBI) and implementing the view.

In an embodiment, the VBI may be developed according to a VBI interface. A platform specific Inter-Process-Communication (IPC) interface may be used to inform the business logic about the user input. A trigger name may be retrieved from a trigger table associated with the scene DB 103 for related one or more widgets using the query. Also, an extra augmented information will be shared using OID associated with the one or more widgets. The business logic may update the view about drawing new screen or components. The new screen or components may be updated using the IPC interface provided by the business logic to inform the view about the view action requested.

In an embodiment, the view may be implemented based on the business logic and the scene data specified in the scene specification data 205.

In an embodiment, the updated data in the scene DB 103 may be independently tested. A test case may be developed for the updated scene data alone.

In an embodiment, the present disclosure discloses a method and a system for developing a scene DB 103 from the scene specification 205. Thus, the scene DB 103 may be updated as and when the scene data in the scene specification 205 is updated.

In an embodiment, the present disclosure discloses a method and a system for integrating the scene from the scene DB as and when required. Thus, the view may not be dependent on the changes made in the scene data. Also, the development complexity of the view according to changes in the scene data and the changes made in the business logic is reduced.

In an embodiment, the scene data in the scene DB 103 may be independently tested. Thus, the testing procedure is simple, and the resources and cost associated with the testing also decreases.

In an embodiment, the HMI application 104 may be installed in a Device Under Test (DUT). The DUT may be a mobile device, a Personal Computer (PC), a laptop, a Personal Device Assistant (PDA), a tablet, or any other computing device capable of provisioning the HMI application 104.

## COMPUTER SYSTEM

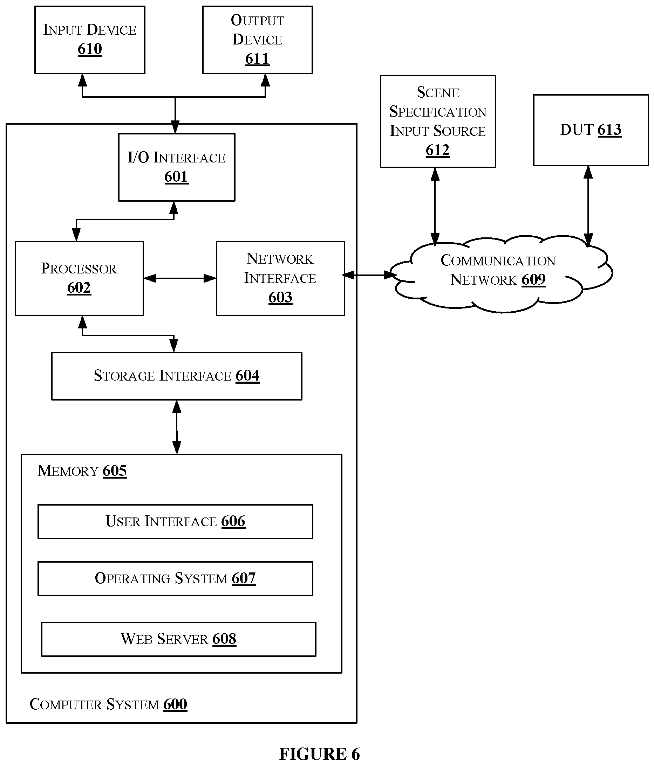

**Figure 6** illustrates a block diagram of an exemplary computer system 600 for implementing embodiments consistent with the present disclosure. In an embodiment, the computer system 600 is used to implement integrating the scene DB 103 with the HMI application 104. The computer system 600 may comprise a central processing unit ("CPU" or "processor") 602. The processor 602 may comprise at least one data processor for integrating the scene DB 103 with the HMI application 104. The processor 602 may include specialized processing units such as integrated system (bus) controllers, memory management control units, floating point units, graphics processing units, digital signal processing units, etc.

The processor 602 may be disposed in communication with one or more input/output (I/O) devices (not shown) via I/O interface 601. The I/O interface 601 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 601, the computer system 600 may communicate with one or more I/O devices. For example, the input device 610 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device 611 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the computer system 600 is connected to the scene specification input sources 612 and the DUT 613 through a communication network 609. The processor 602 may be disposed in communication with the communication network 609 via a network interface 603. The network interface 603 may communicate with the communication network 609. The network interface 603 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 609 may include, without limitation, a direct interconnection, local area network (LAN), wide area network (WAN), wireless network (e.g., using Wireless Application Protocol), the Internet, etc. Using the network interface 603 and the communication network 609, the computer system 600 may communicate with the scene specification input sources 612 and the DUT 613. The network interface 603 may employ connection protocols include, but not limited to, direct connect, Ethernet (e.g., twisted pair 10/100/1000 Base T), transmission control protocol/internet protocol (TCP/IP), token ring, IEEE 802. 11a/b/g/n/x, etc.

The communication network 609 includes, but is not limited to, a direct interconnection, an e-commerce network, a peer to peer (P2P) network, local area network (LAN), wide area network (WAN), wireless network (e.g., using Wireless Application Protocol), the Internet, Wi-Fi and such. The first network and the second network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the first network and the second network may include a variety of network devices, including routers, bridges, servers, computing devices, storage devices, etc.

In some embodiments, the processor 602 may be disposed in communication with a memory 605 (e.g., RAM, ROM, etc. not shown in figure 6) via a storage interface 604. The storage interface 604 may connect to memory 605 including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 605 may store a collection of program or database components, including, without limitation, user interface 606, an operating system 607, web server 608 etc. In some embodiments, computer system 600 may store user/application data 606, such as, the data, variables, records, etc., as described in this disclosure. Such databases may be implemented as fault-tolerant, relational, scalable, secure databases such as Oracle ® or Sybase®.

The operating system 607 may facilitate resource management and operation of the computer system 600. Examples of operating systems include, without limitation, APPLE MACINTOSH[R] OS X, UNIX[R], UNIX-like system distributions (E.G., BERKELEY SOFTWARE DISTRIBUTION™ (BSD), FREEBSD™, NETBSD™, OPENBSD™, etc.), LINUX DISTRIBUTIONS™ (E.G., RED HAT™, UBUNTU™, KUBUNTU™, etc.), IBM™ OS/2, MICROSOFT™ WINDOWS™ (XP™, VISTA™/7/8, 10 etc.), APPLE[R] IOS™, GOOGLE[R] ANDROID™, BLACKBERRY[R] OS, or the like.

In some embodiments, the computer system 600 may implement a web browser 608 stored program component. The web browser 608 may be a hypertext viewing application, for example MICROSOFT[R] INTERNET EXPLORER™, GOOGLE[R] CHROME™0, MOZIL-LA[R] FIREFOX™, APPLE[R] SAFARI™, etc. Secure web browsing may be provided using Secure Hypertext Transport Protocol (HTTPS), Secure Sockets Layer (SSL), Transport Layer Security (TLS), etc. Web browsers 608 may utilize facilities such as AJAX™, DHTML™, ADOBE[R] FLASH™, JAVASCRIPT™, JAVA™, Application Programming Interfaces (APIs), etc. In some embodiments, the computer system 600 may implement a mail server stored program component. The mail server may be an Internet mail server such as Microsoft Exchange, or the like. The mail server may utilize facilities such as ASP™, ACTIVEX™, ANSI™ C++/C#, MICROSOFT[R] .NET™, CGI SCRIPTS™, JAVA™, JAVASCRIPT™, PERL™, PHP™, PYTHON™, WEBOBJECTS™, etc. The mail server may utilize communication protocols such as Internet Message Access Protocol (IMAP), Messaging Application Programming Interface (MAPI), MICROSOFT[R] exchange, Post Office Protocol (POP), Simple Mail Transfer Protocol (SMTP), or the like. In some embodiments, the computer system 600 may implement a mail client stored program component. The mail client may be a mail viewing application, such as APPLE[R] MAIL™, MICROSOFT[R] ENTOURAGE™, MICROSOFT[R] OUTLOOK™, MOZILLA[R] THUNDERBIRD™, etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, CD ROMs, DVDs, flash drives, disks, and any other known physical storage media.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of **Figure 3 and Figure 4** show certain events occurring in a certain order. In alternative embodiments, certain operations may be performed in a different order, modified or removed. Moreover, steps may be added to the above described logic and still conform to the described embodiments. Further, operations described herein may occur sequentially or certain operations may be processed in parallel. Yet further, operations may be performed by a single processing unit or by distributed processing units.

The disclosure of the embodiments of the invention is intended to be illustrative, but not limiting.

While various aspects and embodiments have been disclosed herein, other aspects and embodiments will be apparent to those skilled in the art. The various aspects and embodiments disclosed herein are for purposes of illustration and are not intended to be limiting.

**Claims**

1. A method for integrating a dynamic scene Database (DB) with a Human Machine Interface (HMI) application, the method comprising:

   receiving, by a Database (DB) development tool, a scene specification from one or more input sources, wherein the scene specification comprises scene data and one or more parameters associated with the scene data, wherein the scene data represents a view;
   associating, by the DB development tool, the scene data with a business logic, wherein associating comprises generating a data pool and design interface;
   developing, by the DB development tool, a dynamic scene DB based on at least one of the data pool, the design interface and the one or more parameters, wherein the dynamic scene DB comprises the scene data of the scene specification;
   updating, by the DB development tool, the scene data in the dynamic scene DB when at least one of the scene data in the scene specification and the business logic is updated; and
   integrating, by the DB development tool, the dynamic scene DB with a HMI application for displaying the view, wherein the HMI application retrieves the updated scene data from the dynamic scene DB for implementing at least one of the updated business logic and the updated scene data.

2. The method as claimed in claim 1, wherein the scene specification is in a scene specification format.

3. The method as claimed in claim 1 or 2, wherein the scene data comprises at least one of one or more screens, one or more containers, one or more widgets, one or more texts, one or more numerical, and one or more symbols.

4. The method as claimed in claim 1, 2, or 3, wherein the dynamic scene DB is updated using one or more queries, and wherein each of the one or more queries is configured to perform an action.

5. The method as claimed in any preceding claim, further comprises testing the dynamic scene DB, wherein the testing comprises performing an independent test on the updated scene data.

6. The method as claimed in any preceding claim, wherein developing the scene DB comprises:

   parsing one or more layers of the scene data;
   detecting at least one vector object from the scene data;
   identifying at least one container and corresponding one or more widgets, based on the at least one vector object;
   extracting one or more parameters of the one or more widgets;
   extracting one or more raster images from the scene data to determine pixel parameters of each of the one or more widgets; and
   updating the scene DB with the one or more parameters of the one or more widgets and corresponding pixel parameters.

7. The method as claimed in any preceding claim, wherein the scene data is associated with a unique Identity (ID).

8. A dynamic scene Database (DB) development tool for integrating with a Human Machine Interface (HMI) application, comprising:

   a processor; and
   a memory, communicatively coupled with the processor, which stores processor executable instructions, which on execution causes the processor to:

   receive a scene specification from one or more input sources, wherein the scene specification comprises scene data and one or more parameters associated with the scene data, wherein the scene data represents a view;
   associate the scene data with a business logic, wherein associating comprises generating a data pool and design interface; develop a dynamic scene DB based on at least one of the data pool, the design interface and the one or more parameters, wherein the dynamic scene DB comprises the scene data of the scene specification; update the scene data in the dynamic scene DB when at least one of the scene data in the scene specification and the business logic is updated; and integrate the dynamic scene DB with a HMI application for displaying the view, wherein the HMI application retrieves the updated scene data from the dynamic scene DB for implementing at least one of the updated business logic and the updated scene data.

9. The dynamic scene DB development tool as claimed in claim 8, wherein the scene specification is in a scene specification format.

10. The dynamic scene DB development tool as claimed in claim 8 or 9, wherein the scene data comprises at least one of a screen, a container, a widget, a text, a numerical, and a symbol.

11. The dynamic scene DB development tool as claimed in claim 8, 9, or 10, wherein the dynamic scene DB is updated using one or more queries, and wherein each of the one or more queries is configured to perform an action.

12. The dynamic scene DB development tool as claimed in any of claims 8 - 11, wherein the processor is further configured to test the dynamic scene DB, wherein the test comprises performing an independent test on the updated scene data.

13. The dynamic scene DB development tool as claimed in any of claims 8 - 12, wherein during developing the scene DB, the processor is configured to:

parse one or more layers of the scene data; detect at least one vector object from the scene data; identify at least one container and corresponding one or more widgets, based on the at least one vector object; extract one or more parameters of the one or more widgets; extract one or more raster images from the scene data to determine pixel parameters of each of the one or more widgets; and update the scene DB with the one or more parameters of the one or more widgets and corresponding pixel parameters.

14. The dynamic scene DB development tool as claimed in any of claims 8 - 13, wherein the scene data is associated with a unique Identity (ID).

15. A non-transitory computer readable medium including instruction stored thereon that when processed by at least one processor cause a dynamic scene development tool to perform operation comprising the method of any of claims 1 - 7.

**100**

| SCENE SPECIFICATION INPUT SOURCE **101** | → | SCENE DB DEVELOPMENT TOOL **102** | → | SCENE DB **103** |

HMI APPLICATION **104**

**FIGURE 1**

SCENE DB DEVELOPMENT TOOL **102**

| I/O INTERFACE **201** | MEMORY **202** | PROCESSOR **203** |

DATA **204**

| SCENE SPECIFICATION **205** | OTHER DATA **206** |

MODULES **207**

| COMMUNICATION MODULE **208** | DATA POOL AND DESIGN INTERFACE GENERATOR **209** | SCENE DB GENERATOR **210** |
| SCENE DB UPDATER **211** | SCENE DB INTERGRATOR **212** | OTHER MODULES **213** |

**FIGURE 2**

<u>300</u>

| |
|---|
| RECEIVE A SCENE SPECIFICATION FROM ONE OR MORE SCENE INPUT SOURCES, WHERE THE SCENE SPECIFICATION COMPRISES SCENE DATA AND ONE OR MORE PARAMETERS ASSOCIATED WITH THE SCENE DATA, WHERE THE SCENE DATA REPRESENTS A VIEW |

<u>301</u>

| |
|---|
| ASSOCIATE THE SCENE DATA WITH A BUSINESS LOGIC AND GENERATING A DATA POOL AND A DESIGN INTERFACE BASED ON THE ASSOCIATION |

<u>302</u>

| |
|---|
| DEVELOP A DYNAMIC SCENE DB BASED ON THE DATA POOL, THE DESIGN INTERFACE AND ONE OR MORE PARAMETERS, WHERE THE DYNAMIC SCENE DB COMPRISES THE SCENE DATA OF THE SCENE SPECIFICATION |

<u>303</u>

| |
|---|
| UPDATE THE SCENE DATA IN THE DYNAMIC SCENE DB WHEN AT LEAST ONE OF THE SCENE DATA IN THE SCENE SPECIFICATION AND THE BUSINESS LOGIC IS UPDATED |

<u>304</u>

| |
|---|
| INTEGRATE THE DYNAMIC SCENE DB WITH A HMI APPLICATION FOR DISPLAYING THE VIEW, WHERE THE HMI APPLICATION RETRIEVES THE UPDATED SCENE DATA FROM THE DYNAMIC SCENE DB FOR IMPLEMENTING AT LEAST ONE OF THE UPDATED BUSINESS LOGIC AND THE UPDATED SCENE DATA |

<u>305</u>

**FIGURE 3**

**400**

PARSE ONE OR MORE LAYERS OF THE SCENE DATA                     401

DETECT AT LEAST ONE VECTOR OBJECT FROM THE SCENE DATA          402

IDENTIFY AT LEAST ONE CONTAINER AND CORRESPONDING ONE OR
MORE WIDGETS BASED ON THE AT LEAST ONE VECTOR OBJECT           403

EXTRACT ONE OR MORE PARAMETERS OF THE ONE OR MORE WIDGETS      404

EXTRACT ONE OR MORE RASTER IMAGES FROM THE SCENE DATA TO
DETERMINE PIXEL PARAMETERS OF EACH OF THE ONE OR MORE
WIDGETS                                                        405

UPDATE THE SCENE DB WITH THE ONE OR MORE PARAMETERS OF THE
ONE OR MORE WIDGETS AND CORRESPONDING PIXEL PARAMETERS         405

**FIGURE 4**

**FIGURE 5A**

**FIGURE 5B**

**FIGURE 6**

Europäisches
Patentamt

European
Patent Office

Office européen
des brevets

# EUROPEAN SEARCH REPORT

Application Number

EP 18 16 5353

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/058248 A1 (PARK YOUNGCHOON [US]) 4 March 2010 (2010-03-04) | 1-5, 7-12,14, 15 | INV. G06F8/38 |
| A | * paragraph [0030] - paragraph [0032] * <br> * paragraph [0037] * <br> * paragraph [0042] - paragraph [0045] * <br> * paragraph [0055] * <br> * paragraph [0072] - paragraph [0074] * <br> * paragraph [0079] * <br> * figures 2C, 3A, 3B, 5A, 5B * <br> ----- | 6,13 | |
| A | EP 2 312 434 A2 (BANK OF AMERICA [US]) 20 April 2011 (2011-04-20) <br> * paragraph [0012] * <br> * paragraph [0021] - paragraph [0024] * <br> * paragraph [0027] * <br> * paragraph [0030] - paragraph [0035] * <br> * figures 2A, 2B, 3 * <br> ----- | 1-15 | |

TECHNICAL FIELDS
SEARCHED (IPC)

G06F

The present search report has been drawn up for all claims

| Place of search | Date of completion of the search | Examiner |
|---|---|---|
| The Hague | 14 May 2018 | De Coi, Juri |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 16 5353

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2018

| Patent document cited in search report | Publication date | Patent family member(s) | Publication date |
|---|---|---|---|
| US 2010058248 A1 | 04-03-2010 | NONE | |
| EP 2312434 A2 | 20-04-2011 | CA 2713970 A1<br>CN 102096694 A<br>EP 2312434 A2<br>US 2011047453 A1 | 23-02-2011<br>15-06-2011<br>20-04-2011<br>24-02-2011 |

EPO FORM P0459

For more details about this annex : see Official Journal of the European Patent Office, No. 12/82